# EUROPEAN PATENT APPLICATION

(11) **EP 1 148 323 A2**
(43) Date of publication of application: **24.10.2001**
(21) Application number: 01108851.5
(22) Date of filing: 09.04.2001
(51) Int. Cl.: G01J 5/00

(54) **Temperature detecting device and method for running yarn**

(30) Priority: 17.04.2000 JP 2000121070; 30.05.2000 JP 2000160527; 13.06.2000 JP 2000176767; 29.01.2001 JP 2001020251
(71) Applicant: Murata Kikai Kabushiki Kaisha, Minami-ku, Kyoto-shi, Kyoto 601 (JP)
(72) Inventor: Kino, Yoshihiro, Kohata, Uji-shi, Kyoto (JP); Kobayashi, Junya, Nara-shi, Nara (JP); Takakura, Keishiro, Kyotanabe-shi, Kyoto (JP); Masai, Tetsuji, Kusatsu-shi, Shiga (JP); Umehara, Yoshito, Uji-shi, Kyoto (JP)
(74) Representative: Liedl, Christine, Dipl.-Chem.

(57) **Abstract**

It is an object of the present invention to provides a temperature detecting device and method for a running yarn which can sensitively and accurately detect the temperature of the running yarn in a non-contact manner. The present invention provides a temperature detecting device for a running yarn including an infrared sensor for obtaining infrared rays emitted from the running yarn, via an incidence section, the temperature detecting device comprising converging means 15 located between an incidence section 12 and an infrared sensor 14, for converging infrared rays obtained through the incidence section 12, on the infrared sensor 14, and a reflector 3 spaced from the incidence section 12 and having a reflection surface directed to the incidence section, wherein a space 4 is formed between the incidence section 12 and the reflector 3. Infrared rays emitted from a running yarn Y are directly guided to the infrared sensor 14 via the converging means 15 and also indirectly guided to the infrared sensor 14 via the reflector 3 and the converging means 15 (Fig. 1).

## Description

### Field of the Invention

The present invention relates to a temperature detecting device and method for a running yarn for detecting, in a non-contact manner, the temperature of a yarn that runs while being heated by heating means. The present invention also relates to a false twisting processing machine comprising a temperature abnormality monitoring mechanism.

### Background of the Invention

Yarn processing often involves a yarn heating process. In processing synthetic fiber yarns such as filament yarns, running yarns are subjected to a drawing process or a false twisting process by being drawn while being heated. In such a heating process for the running yarns, it is important to control the yarn heating temperature to be constant in order to prevent uneven heating to obtain processed yarns of uniform quality.

Since it is difficult to measure the heating temperature for the running yarn, the temperature of the heating means is typically measured to indirectly detect the temperature of the running yarn to thereby control the temperature of the heating means based on the results of the detection. The temperature of the running yarn is thus indirectly detected, so that for the uniform quality, processed yarns must be subjected to sampling inspections and checked for quality so as to appropriately control the heating temperature for the running yarn set by the heating means.

Attempts have been made to directly detect the temperature of the running yarn instead of executing the indirect detection. A emission thermometer has been proposed, for directly detecting the temperature of fibers such as optical fibers, for example, in the Unexamined Japanese Patent Application Publication (Tokkai Sho) No. 62-47525, and this comprises a reflector for reflecting energy emitted from fibers and a detection element arranged closer to the fibers than the reflector so as to receive the energy reflected from the reflector, the detection element having a rectangular detection surface with one side located in the radial direction of measured fibers, thereby improving the sensitivity and reducing detection errors resulting from the vibration of the fibers.

Since, however, a small amount of energy is emitted from thin yarns such as filament yarns, the temperature detecting sensitivity is required to be increased and the conventional emission thermometer leaves room for improvement in terms of the improvement of the sensitivity. Further, yarns such as filament yarns which are running at a high speed undergo complicated vibration, so that the conventional emission thermometer leaves room for improvement in terms of the reduction of detection errors.

It is thus a first object of the present invention to provide a temperature detecting device and method for a running yarn which can sensitively and accurately detect the temperature of a running yarn in a non-contact manner.

As described above, it is known that if the temperature of a moving measured object is to be detected, non-contact thermometers utilizing an infrared temperature sensor are used due to their advantage of being able to detect the temperature in a non-contact manner.

If the temperature is to be measured using non-contact thermometers of this kind, the non-contact thermometers are connected to a control device to measure the temperature based on information transmitted from the non-contact thermometers to the control device. That is, the temperature of the unknown measured object is measured in a non-contact manner based on the correlationship between detection signals issued by the infrared sensor upon receiving infrared rays emitted from the measured object, and separately determined detection signals, and the temperature.

If, however, the measured object is moving, the detection signals must be selected from. This is because the above correlationship is derived by fixing the position of the measured object. That is, the correlationship is derived by assuming that the measured object is located at a specified point (typically a focal point where the emission of infrared rays from the measured objet to the infrared sensor is highest). Thus, the above temperature measurements must involve the operation of obtaining detection signals provided if the measured object is located at the specified point.

If the temperature is to be measured as described previously, it is contemplated that detection signals obtained from the measured object are loaded in the control device (microcomputer). The control device then internally selects from the detection signals to measure the temperature using the selected detecting signal and the above correlationship. In this case, the control device actually loads even detection signals unnecessary for the temperature measurements. This requires the control device to execute the additional information processing, the selection operation and requires additional communication lines to be provided, for transmitting detection signals including unwanted ones from the non-contact thermometers to the control device.

It is thus a second object of the present invention to provide a temperature measuring device that is operative if detection signals from a temperature measuring device are loaded in a control device such as a microcomputer, to reduce the amount of information processing to be executed by the control device, thereby enabling accurate temperature measurements.

It is a third object of the present invention to provide a false twisting processing machine that can discover, if it has a temperature detecting or measuring device, an abnormal yarn temperature in a spindle provided with the temperature detecting or measuring device and automatically and accurately detect the abnormal yarn temperature.

### Summary of the Invention

To attain the first object, a temperature detecting device for a running yarn according to the present invention, including an infrared sensor that obtains infrared rays emitted from the running yarn, via an incidence section, is characterized by comprising converging means located between the incidence section and the infrared sensor, for converging the infrared rays obtained through the incidence section, to the infrared sensor, a reflector spaced from the incidence section and having a reflecting surface directed toward the incidence section, and a running yarn passing space located between the incidence section and the reflector.

Preferably, means for regulating the running yarn passing space is provided between a focus of the converging means and the reflector. The reflector is preferably planar. Furthermore, guide means is preferably provided at least either before or after a space sandwiched between the incidence section and the reflector, for restraining deflection of the running yarn.

To attain the first object, a temperature detecting method for a running yarn including an infrared sensor that obtains infrared rays emitted from the running yarn, via an incidence section, is characterized in that the infrared rays emitted from the running yarn are directly guided to the infrared sensor via converging means and are also indirectly guided to the infrared sensor via a reflector and the converging means.

The running yarn is preferably passed between a focus of the converging means and the reflector. The reflector is preferably planar. Further, temperature is preferably detected while using guide means to restrain deflection of the running yarn at least either before or after a space sandwiched between the incidence section and the reflector.

A part of infrared rays emitted from the running yarn is directly directed to the incidence section, and a rest part of infrared rays emitted from the running yarn is indirectly directed to the incidence section via the reflector. After the summation, infrared rays entering the incidence section are converged by the converging means, so that the infrared sensor obtains more of the infrared rays. If the running yarn is passed between the focus of the converging means and the reflector, the amount of infrared rays obtained by the incidence section does not vary significantly despite the movement of the running yarn between the focus and the reflector. If the reflector is planar, the amount of infrared rays obtained by the incidence section does not vary significantly despite variations in yarn diameter. If the guide means restrains the deflection of the running yarn, the latter is restrained from moving between the focus and the reflector despite the contact of the yarn with guides.

To attain the second object, a temperature measuring device according to the present invention which allows an infrared sensor to obtain infrared rays emitted from a measured object while switching the transmission during predetermined cycles by means of a shutter, is characterized by comprising a peak hold circuit for executing a peak hold process on a detection signal output from the infrared sensor, during a cycle longer than the switching cycle of the shutter, and a control device for obtaining peak values held by the peak hold circuit, during predetermined cycles.

The control device obtains the peak value held by the peak hold circuit, during a cycle interval longer than the switching cycle of the shutter.

The cycle during which the control device obtains the peak value from the peak hold circuit is longer than a swing cycle of the measured object.

To achieve the third object, a false twisting processing machine according to the present invention is characterized by comprising a false twisting device, a yarn heating device located upstream of the false twisting device, thermometers each provided for a corresponding spindle or a corresponding group of predetermined spindles, for measuring temperature of a heated yarn, a temperature measuring device for obtaining detection signals from the thermometers, and a control device including a display section and shared by a plurality of the temperature measuring devices, the temperature measuring device transmitting temperature data determined based on the detection signals from the thermometers to the control device together with a spindle number data so that the display section of the control device can display the spindle number and yarn temperature.

The temperature measuring device comprises means for determining a temperature error based on the detection signals from the thermometers and means for transmitting an alarm signal indicative of the temperature error to the control device together with a spindle number.

The means for determining a temperature error determines an error in the current temperature based on the current temperature and a predetermined allowable temperature range and also determines a temperature variation amount error based on the amount of variations within a predetermined period of time and a preset allowable temperature variation range.

The thermometers are non-contact thermometers that measure the yarn temperature in a non-contact manner, and the non-contact thermometers are arranged near an outlet of the yarn heating device.

### Brief Description of the Drawings

Figure 1 is a perspective view of a temperature detecting device for a running yarn according to the present invention.
Figure 2 is a sectional view of a variation of the temperature detecting device for a running yarn according to the present invention.
Figure 3 is a sectional view of a variation of the temperature detecting device for a running yarn according to the present invention.
Figure 4 is a sectional view of a variation of the temperature detecting device for a running yarn according to the present invention.
Figure 5 is a schematic view of a yarn processing machine to which the temperature detecting device for a running yarn according to the present invention is applied.
Figure 6 is a perspective view of a variation of the temperature detecting device for a running yarn according to the present invention.
Figure 7 is a schematic view of a false twisting devive comprising a non-contact temperature measuring device.
Figure 8 is a schematic view of a signal input section of a non-contact thermometer.
Figure 9 is a circuit diagram of a peak hold circuit for detecting signals from an infrared sensor.
Figure 10 is a waveform diagram of various signals.
Figure 11 is a schematic diagram of a control mechanism for a false twisting processing machine.
Figure 12 is a flow chart showing a temperature error monitoring procedure in a first example.
Figure 13 is a flow chart showing a temperature error monitoring procedure in a second example.
Figure 14 is a perspective view of an infrared emission thermometer.

### Detailed Description of the Preferred Embodiments

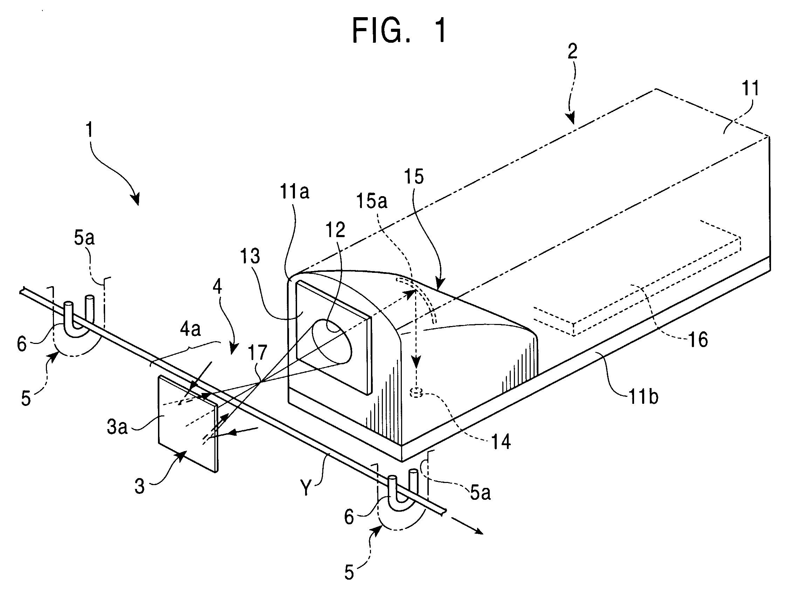

A temperature detecting device for a running yarn according to a first embodiment of the present invention will be described with reference to Figures 1 to 4.

A temperature detecting device 1 for a running yarn, shown in Figure 1, comprises a sensor main body 2, a reflector 3, a space 4 formed between a front surface of the sensor main body 2 and the reflector 3, for allowing a running yarn Y to pass therethrough, and regulation means 5 for regulating a yarn path in the space 4 between the reflector 3 and a focus 17. The sensor main body 2, the reflector 3 and the regulation means 5 are integrally mounted in an enclosure (not shown in the drawings) or separately mounted on a base (not shown in the drawings), to constitute the temperature detecting device 1.

The sensor main body 2 comprises a box 11, an incidence section 12 formed in a front surface 11a of the box 11, chopper means 13 arranged so as to overlap the position of the incidence section 12, an infrared sensor 14, converging means 15 located between the incidence section 12 and the infrared sensor 14, for converging infrared rays obtained through the incidence section 12, on the infrared sensor 14, and a circuit board 16 disposed on a base 11b of the box 11.

The incidence section 12 is formed on the chopper means 13 forming the front surface 11a, as a circular light-incident iris. That is, the effective diameter of the chopper means 13 also acts as the incidence section 12. The shape of the incidence section 12 is not limited to the circle. The converging means 15 is formed of an elliptical mirror 15a located between the incidence section 12 and the infrared sensor 14 to converge infrared rays obtained through the incidence section 12, on the infrared sensor 14. As shown in the drawing, the elliptical mirror 15a is disposed so that its focus on the running yarn Y side is located between the incidence section 12 and the reflector 3 and closer to the incidence section 12 and so that its focus on the infrared sensor 14 side is located near a detection surface of the infrared sensor 14. The elliptical mirror 15a as the converging means 15 directs more of the infrared rays obtained through the incidence section 12, to the infrared sensor 14.

The regulation means 5 is, for example, slits 5a that limit the space 4 for allowing the running yarn Y to pass therethrough, to the detection section between the reflector 3 and the focus 17. When the running yarn Y is inserted into the slits 5a, it is automatically located between the reflector 3 and the focus 17. The slits 5a position the running yarn Y between the reflector 3 and the focus 17, have a width sufficiently larger than the swing amplitude of the running yarn Y, and remain in non-contact with the running yarn Y. When the running yarn is located in the slits 5a in a non-contact manner, it is located between the reflector 3 and the focus 17.

The reflector 3 is formed into a planar mirror 3a. When the running yarn Y is thick, light reflected from the planar mirror 3a, that is, indirect light is blocked and reduced by the running yarn Y, while direct light from the running yarn Y increases. On the contrary, when the running yarn Y is thin, the direct light decreases, while the rate at which the reflected light, that is, the indirect light is blocked decreases. Accordingly, when the reflector 3 is the planar mirror 3a, its output does not vary significantly despite changes in the diameter of the running yarn Y. Further, the planar mirror 3a can be easily integrated into an enclosure or the like.

The chopper means 13 chops infrared rays emitted from the running yarn Y and preferably comprises a liquid-crystal thick-film optical modulator (hereafter referred to as a "liquid-crystal chopper) so as to reduce the size of the entire device and to improve the accuracy. The infrared sensor 14 is preferably formed of a pyroelectric element. The infrared sensor may comprise a sensor other than the pyroelectric element. Signals from the infrared sensor 14 are processed by the circuit substrate 16.

The space 4 for allowing the running yarn Y to pass therethrough is formed between the incidence section 12 and the planar mirror 3a. With the regulation means 5, the space 4 for allowing the running yarn Y to pass therethrough is limited to the detection section 4a between the focus 17 and the planar mirror 3a. With the detection section 4a thus formed, the amount of infrared rays obtained by the infrared sensor 14 remains unchanged to increase the sensitivity whatever position of the detection section 4a the running yarn Y is present, that is, even if the running yarn Y is moving between the focus 17 and the planar mirror 3a.

Separately from or integrally with the slits 5a, guide means 6 may be provided for restraining the deflection of the running yarn Y by contacting with it. If the physical properties of the running yarn Y remain unchanged even when the running yarn Y contacts with the guide means 6,6, the latter can be provided. The guide means 6 have a width smaller than the swing amplitude of the running yarn Y, so that the running yarn Y intermittently comes into contact with the guide means 6 to have its swing hindered. The guide means 6,6 guide the running yarn Y while contacting with it and are U-shaped as shown in the drawing, or α-shaped, or are shaped in the form of rings or the like.

The operation of the temperature detecting device 1 configured as described above will be explained.

Infrared rays emitted from the running yarn Y are allowed to directly enter the sensor main body 2 via the incidence section 12 and are alternatively reflected by the reflector 3 before indirectly entering the sensor main body 2 via the incidence section 12. The infrared rays directly obtained via the incidence section 12 and the infrared rays indirectly obtained via the reflector 3 and the incidence section 12 are both converged by the elliptical mirror 15a and then reach a receiving surface of the infrared sensor 14. Since the converging means 15 comprises the elliptical mirror 15a located between the incidence section 12 and the infrared sensor 14, the sum of the amounts of direct and indirect light reaching the receiving surface of the infrared sensor 14 increases to reduce the aberration of the optical system, thus increasing the utilization of the light to improve the sensitivity with which the temperature of the running yarn Y is detected.

Further, the results of the inventor's experiments indicate that when the running yarn Y is passed between the focus 17 of the elliptical mirror 15a and the reflector 3, the sensitivity remains substantially unchanged provided the running yarn Y is moved between the focus 17 of the elliptical mirror 15a and the reflector 3. Additionally, since the reflector 3 comprises the planar mirror 3a, the sensitivity is further stabilized to enable the temperature to be detected accurately. It is thus possible to accurately detect the temperature of the running yarn Y, which swings hard due to fast running. If, for example, the guide means 6,6 for the running yarn Y are not provided or the operation is affected by the unsteady holding of the yarn, the temperature can always be detected accurately even if the running yarn Y slightly deviates from the correct passing position. The temperature detecting device 1 configured as described above can accurately detect the temperature even if the running yarn Y is deflected about 3 mm. Since the allowable range of the deflection of the running yarn Y according to the emission thermometer of the Unexamined Japanese Patent Application Publication (Tokkai Sho) No. 62-47525 is 0.3 mm, the temperature detecting device 1 according to the present invention has a substantially high redundancy for measurements.

Further, since the chopper means 13 chops the infrared rays at a high speed, the infrared sensor 14, comprising the pyroelectric element, can provide appropriate outputs. Thus, the infrared sensor 14 obtains a sufficient amount of the infrared rays emitted from the running yarn Y and the chopper means 13 chops them at a high speed, so that the temperature detecting device 1 can directly and accurately detect the temperature of the thin yarn Y, running at a high speed while vibrating. Further, if the infrared sensor 14 comprises a generally inexpensive pyroelectric type sensor, manufacturing costs will be low.

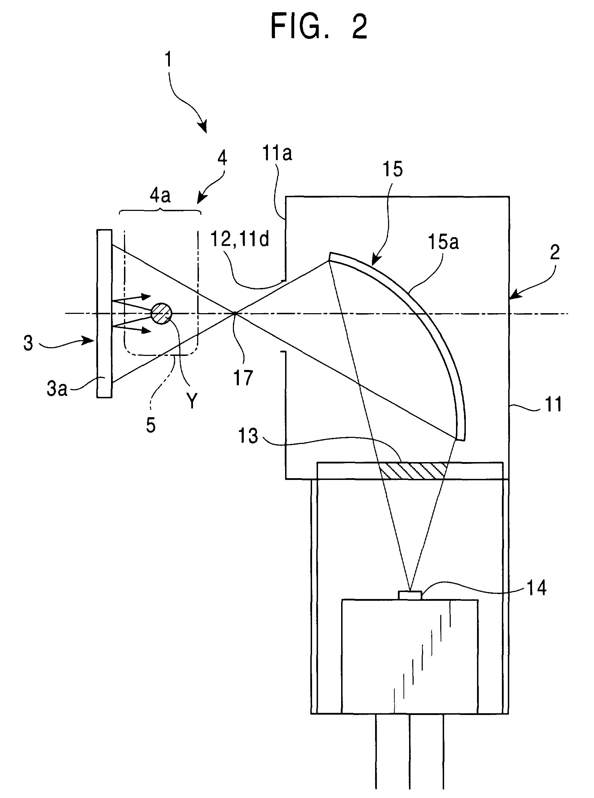

The temperature detecting device 1 can employ the arrangement aspect shown in Figures 2 to 4.

In the temperature detecting device 1 shown in Figure 2, the chopper means 13 is arranged between the elliptical mirror 15a and the infrared sensor 14 and comprising a liquid-crystal chopper. The incidence section 12 is formed in the hole 11d in the front surface 11a of the box 11. The focus 17 of the elliptical mirror 15a is formed away from the hole 11d relative to the reflector 3. In this case, the reflector 3 and the front surface 11a of the box 11 partition the space 4. Further, the regulation means 5 limits the space 4 between the focus 17 and the reflector 3.

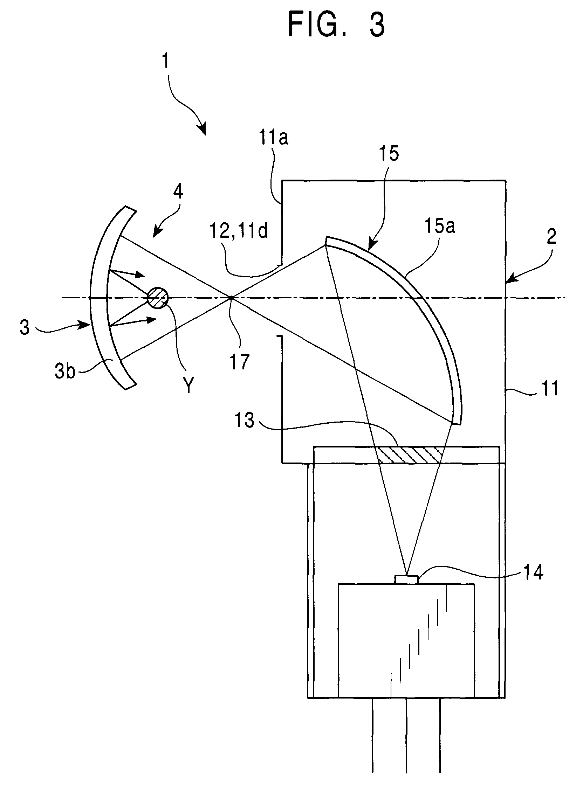

In the temperature detecting device 1 shown in Figure 3, the reflector 3 is formed into a spherical mirror 3b located opposite to the running yarn Y. Since the reflector 3 is spherical, the infrared rays emitted from the running yarn Y can be reflected toward the incidence section 12 (lid) and converged.

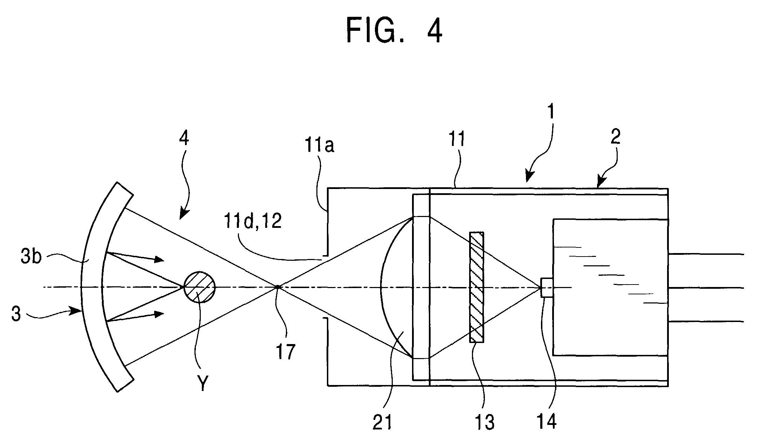

In the temperature detecting device 1 shown in Figure 4, the converging means comprises a convex lens 21, the chopper means 13 is arranged between the convex lens 21 and the infrared sensor 14, and the reflector 3 comprises the spherical mirror 3b. The incidence section 12, the convex lens 21, the chopper means 13 comprising a liquid-crystal chopper, and the infrared sensor 14 are arranged in series in this order. Since the reflector 3 comprises the spherical mirror 3b, the infrared rays emitted from the running yarn can be reflected toward the incidence section 12 and converged. Instead of the spherical mirror, the reflector 3 may be a parabolic mirror, an elliptical mirror, or a concave mirror such as a polyhedron.

In any of the temperature detecting devices 1 in Figures 2 to 4, the focus 17 is located slightly away from the incidence section 12 in the front surface 11a of the box 11 relative to the reflector 3. The focus 17 may be located near the incidence section 12.

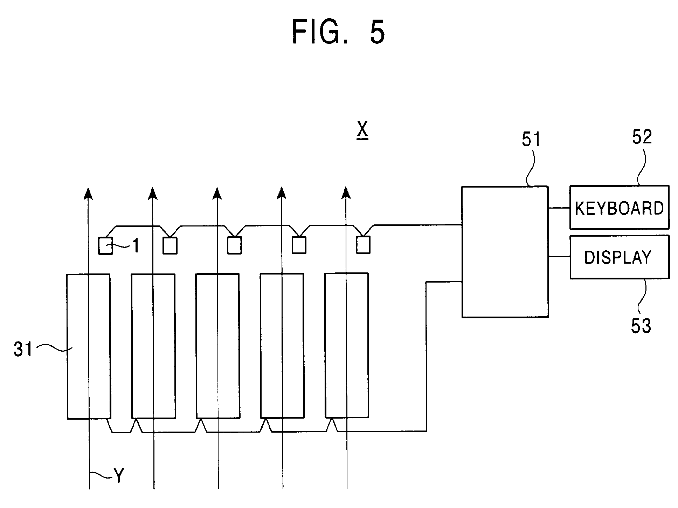

Next, an example of an application of the temperature detecting device 1 according to the first embodiment of the present invention will be described with reference to the yarn processing machine X shown in Figure 5.

The yarn processing machine X in Figure 5 comprises a plurality of spindles for processing yarns and obtains a processed yarn by heating the synthetic fiber yarn Y running through each spindle using heating means 31 for each spindle. In processing the synthetic fiber yarn Y, it is an important factor to maintain a constant heating temperature for the synthetic fiber yarn Y in order to prevent uneven heating to obtain processed yarns of uniform quality. Thus, the temperature detecting devices 1 are each fixedly arranged at a yarn outlet side of the heating means 31 for the corresponding spindle to detect the temperature of the yarn Y running through the spindle. The temperature detecting devices 1 are each connected to a control device 51 for controlling the entire yarn processing machine X. The temperature detecting devices 1 may each be fixedly arranged for a corresponding group of a predetermined number of spindles (for example, one for twelve spindles) to detect only the temperature of a representative spindle.

The control device 51 stores a correction table to correct outputs from the temperature detecting devices 1 to temperature measured values. The correction table comprises functions (parameters) corresponding to yarn conditions such as the yarn thickness, the yarn type, and the yarn color. The correction table has its functions set by selecting yarn conditions, that is, yarn thicknesses, yarn types, and yarn colors as well as yarn temperatures and causing the temperature detecting devices 1 to measure the temperature beforehand. The control device 51 selects from the functions in the correction table based on yarn conditions input from a keyboard 52, corrects outputs from the temperature detecting devices 1 to temperature measured values based on the functions, and displays the corrected values on a display 53. Further, the control device 51 controls the heating means 31 for each spindle based on the temperature measured value to determine an appropriate heating temperature for the yarn Y running through the spindle.

When the temperature detecting devices 1 of the present invention are thus applied to the yarn processing machine X, the output from each temperature detecting device 1 can be corrected to the temperature measured value so that the heating temperature of the corresponding heating means 31 can be controlled based on the temperature measured value. Accordingly, the variation of the temperature of the synthetic fiber yarn Y between the spindles can be eliminated to obtain processed yarns of uniform quality.

Further, since the temperature detecting device 1 is inexpensive as described above, the manufacturing costs of the yarn processing machine Y are prevented from increasing even if the temperature detecting device 1 is arranged for each spindle.

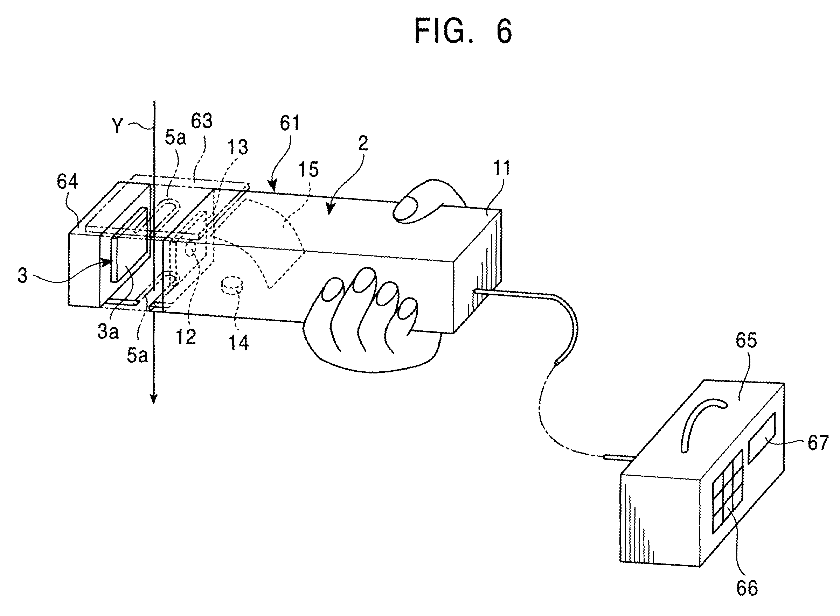

A variation of the temperature detecting device of the present invention will be described with reference to Figure 6. In this figure, the same reference numerals as those in Figure 1 denote the same members, and their description is omitted.

The temperature detecting device 61 shown in Figure 6 is of a handy type that enables the operator to detect the yarn temperature in any spindle while holding the device 61. In the temperature detecting device 61, the incidence section 12 is formed in the front surface of the sensor main body 2, and the chopper means 13 comprising a liquid-crystal is provided in the incidence section 12. The sensor main body 2 has the elliptical mirror 15 arranged therein to receive infrared rays from the incidence section 12 and converge them and the infrared sensor 14 also arranged therein to receive the infrared rays converged by the elliptical mirror 15. The sensor main body 2 also has a bracket 63 provided at a front end thereof and having a U-shaped cross section, the bracket 63 supporting a support member 64. The support member 64 is installed in the bracket 63 at an interval from the incidence section 12. The support member 64 also has the planar mirror 3a constituting the reflector 3. The mirror 3a is installed in the support member 64 opposite to the incidence section 12. The bracket 63 has slits 5a formed therein as regulation means at the front and rear (see from the direction of the running yarn Y) of the sensor main body 2. The slits 5a positions the running yarn Y between the focus 17 and the reflector 3 in a non-contact manner. Further, the temperature detecting device 61 is connected to a control device 65. The latter has functions similar to those of the control device 51 in Figure 5 and has a keyboard 66 and a display 67.

The operator holds the sensor main body 2 and positions the running yarn Y in the slits 5a in a non-contact manner. Then, the operator can detect the temperature of the running yarn Y by means of simple operations.

The temperature detecting device 1 according to the first embodiment of the present invention is not limited to those shown in Figures 1 to 6 but may be formed, for example, as follows:
(1) The chopper means 13 may be an optical chopper comprising a vibrating or rotating blade to mechanically chop infrared rays emitted from the running yarn Y.
(2) If the guide means 6 are provided, they are not necessarily be installed front and rear (see from the direction of the running yarn Y) of the sensor main body 2. If the running yarn Y can be prevented from vibrating, the guide means 6 may be provided only either before or after the sensor main body 2.
(3) The converging means 15 is not limited to the elliptical mirror or the convex lens, but a prism may be applied to converge infrared rays from the running yarn Y on the infrared sensor 14.
(4) In Figure 1, the running yarn Y runs in a direction perpendicular to the reflecting direction of the elliptical mirror 15a of the converging means 15, but the running direction of the running yarn Y may be rotated through about 90 degrees to allow the running yarn Y to run parallel with the reflecting direction of the elliptical mirror 15a. In this manner, the running yarn Y may run in any direction provided this direction is generally parallel with the front surface 11a of the box 11 and exists within the space 4.
(5) The temperature detecting device 1 is applicable to yarn processing machines having various heating means, including draw texturing machine having a contact plate heater or a non-contact infrared heater and take-up winders having a hot roller or the like around which the running yarn is wound. Additionally, the running yarn Y to which the temperature detecting device 1 is applied is preferably a filament yarn but the present invention is applicable to steam-heated spun yarns.

Next, a second embodiment of the present invention will be explained.

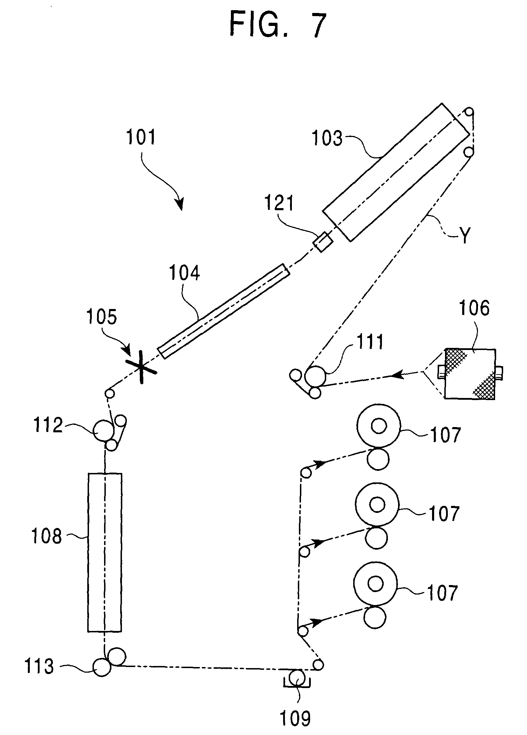

The configuration of a false twister 101 as a yarn processing device comprising a non-contact thermometer according to the present invention will be explained. In the false twister 101 shown in Figure 7, the yarn Y released from a supplying package 106 is maintained at such yarn tension that enables the yarn to be drawn, by means of a first feed roller 111 and a second feed roller 112 arranged downstream of the first feed roller 111.

A false twisting device 105 is provided at a downstream location between the first and second feed rollers 111,112. The false twisting device 105 twists the yarn Y, so that the yarn Y is falsely twisted between the first feed roller 101 and the false twisting device 105 (this area is called a "false twisting area").

Further, a thermal-fixing heater 103 is provided at an upstream location between the first feed roller 111 and the second feed roller 112. The heater 113 heats the twisted yarn Y up to a drawing temperature, and the heating temperature is accurately controlled based on a heater temperature detected by a temperature sensor (not shown in the drawings) such as a thermocouple which is built into the heater 103 or the temperature of the yarn Y detected by a non-contact thermometer 121, described later.

A cooling plate 104 is provided downstream of the heater 103 to cool the yarn Y heated by the heater 103.

A second heater 108 is provided between the second feed roller 112 and a third feed roller 113 to heat the yarn Y again. Subsequently, the yarn Y is oiled by an oiling device 109 and wound into a winding package 107.

In this manner, the false twister 101 twits the yarn Y released from the supplying package 106 while drawing it and then thermally fixes the twisted yarn to process the yarn into a bulky processed yarn.

The yarn Y comprises thermally plastic synthetic fibers such as polyester or polyamide, for example.

Next, a temperature measuring device 120 according to the second embodiment of the present invention will be explained.

The temperature measuring device 120 comprises a non-contact thermometer 121 incorporating an infrared sensor 125, a peak hold circuit 127, described later, and a control device 128.

The non-contact thermometer 121 is disposed downstream of the heater 103 corresponding to a location where the yarn has its temperature measured, and detects infrared rays emitted from the yarn Y to measure the temperature.

Further, the non-contact thermometer 121 is configured so as to measure the temperature of a measured object such as the yarn Y substantially without any needs for contact with the measured object. Thus, the transmission of the twisting by the false twisting device 105 is prevented from being hindered.

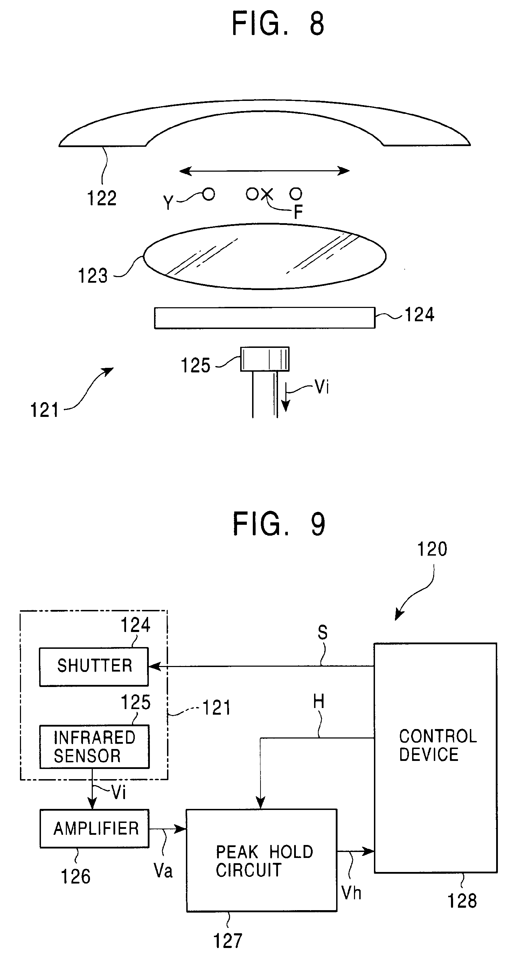

The signal input section of the non-contact thermometer 121 comprises a reflection plate 122, a lens 123, a shutter 124 and the infrared sensor 125 as shown in Figure 8. The focus of the lens 123 is at a focal position F, and the reflection plate 122 and the lens 123 are disposed symmetrically with respect to the focal position F. the shutter 124 and the infrared sensor 125 are disposed at the same side with respect to the focal position F and sequentially further therefrom.

When the non-contact thermometer 121 is used to measure the temperature, it is disposed so that the yarn Y as the measured object passes through the focal position F. A surface (an opening surface for obtaining emitted infrared rays) of the non-contact thermometer 121 at which a signal input section-constituting member is located is perpendicular to the extending direction of the yarn Y as the measured object.

The focal position F will be described later.

In this embodiment, the infrared sensor 125 is a pyroelectric type infrared sensor comprising a ferroelectric crystal. The ferroelectric crystal is thermally expanded and deformed when the temperature changes. At this time, the interval between the center of gravity of positive charges and the center of gravity of negative charges changes. Then, the magnitude of spontaneous polarization changes and this is manifested as a change in surface charge.

The principle of temperature detection by the pyroelectric type infrared sensor is based on a change in surface charge originating from a change in temperature. Consequently, since the magnitude of polarization varies depending on the intensity of infrared rays applied to the pyroelectric type infrared sensor, the latter can detect the intensity of the infrared rays.

That is, as shown in Figure 9, the infrared sensor 125 outputs a voltage (a detected voltage Vi, described later) as a detection signal corresponding to the temperature of the measured object.

The reflection plate 122 has a concave form so as to converge, on the infrared sensor 125, infrared rays emitted in all the circumferential directions from the measured object located near the focal position F. That is, the infrared rays emitted from the measured object to the reflection plate 122 are reflected by the reflection plate 122 and captured by the infrared sensor 125 as indirect light. Further, the lens 123 converges the infrared rays emitted from the measured object, on the infrared sensor 125, and is disposed so that the infrared rays from the object located near the focal position F are focused at one end of the infrared sensor where a pyroelectric member is located. Thus, the infrared sensor 125 obtains the sum of the direct and indirect light emitted from the measured object, via the lens 123 as the converging means. Consequently, when the object is at the focal position F, a maximum amount of the infrared rays emitted from the object reach the infrared sensor 125.

The functions of the shutter 124 will be described later.

The yarn Y being processed by the false twister 101 described previously is transferred by the above described feed rollers and the like to move along the extending direction of the yarn Y. As the same time, the yarn Y swings perpendicularly to its extending direction due to the false twisting effected by the false twisting device 105.

The movement in the extending direction of the yarn Y as a heat source does not substantially affect the temperature measurement because the cross section of the yarn Y is not substantially changed, as shown in Figure 8. The swing of the yarn Y perpendicular to its extending direction, however, changes the sectional position of the yarn Y relative to the focal position F and thus the amount of infrared rays incident on the infrared sensor 125, thus affecting the temperature measurement.

The amount of infrared rays reaching the infrared sensor 125 is maximized when the yarn Y is at the focal position F and decreases as the yarn Y moves away from this position. This is because the amount of infrared rays reaching the infrared sensor 125 is maximized when the heat source as the measured object is at the focal position F, as described previously.

That is, the peak value of the detected voltage Vi which correspond to a shutter opening period is largest when the yarn Y is located at the focal position F.

The correlationship between the temperature of the measured object and the detected voltage Vi as the detection signal from the infrared sensor 125 relates to the emissivity of the measured object and varies depending on processing conditions such as the type or thickness of the yarn Y. Accordingly, the correlationship must be derived for each of the processing conditions beforehand.

For example, the correlationship can be derived by directly measuring the temperature of the yarn Y tentatively using a contact thermometer.

Once the correlationship has been derived, the temperature of the measured object such as the yarn Y can be measured in a non-contact manner simply by measuring the detected voltage Vi using the non-contact thermometer 121.

In this connection, the correlationship is derived under the assumption that the yarn Y is at the focal position F, and the distance between the infrared sensor 125 and the yarn Y is not used as a variable. If an attempt is made to derive the correlationship between the detected voltage and the measured temperature also using the above distance as a variable, the maximum amplitude of the swing of the measured object must also be taken into account, thereby making the derivation of the correlationship complicated.

Thus, the present embodiment determines the magnitude of the peak value of the detected voltage Vi so that the temperature of the yarn Y swinging relative to the focal position F can be accurately measured using the correlationship established if the yarn Y is at the focal position F.

Now, the shutter 124 will be explained.

The shutter 124 comprises a liquid-crystal shutter that controls light transmitted through the liquid crystal using a an ON and an OFF operations performed by the liquid crystal to change the polarization state of the light, in combination with a polarization element.

The infrared sensor 125 as the pyroelectric type infrared sensor type detects the intensity of infrared rays using the polarization of the ferroelectric crystal caused by a change in its temperature as described previously. In this case, when the polarized ferroelectric crystal is left in the air as it is, these charges are neutralized and zeroed by ions floating in the air. Thus, to accurately detect the intensity of infrared rays, it is necessary to periodically perform the operation of hindering the infrared rays from reaching the infrared sensor 125 to reset the polarization and opening the shutter 124 to cause infrared rays to be incident again.

The shutter 124 enables and disables the arrival of infrared rays at the infrared sensor 125 by being opened and closed several tens of times per second.

Thus, even if infrared rays are continuously emitted from the measured object, the shutter 124 is opened and closed to prevent infrared rays from reaching the infrared sensor 125, which thus intermittently detects the detected voltage Vi.

That is, the purpose of providing the shutter 124 in the non-contact thermometer 121 is to periodically block continuously emitted infrared rays to reset the polarization of the above described ferroelectric crystal.

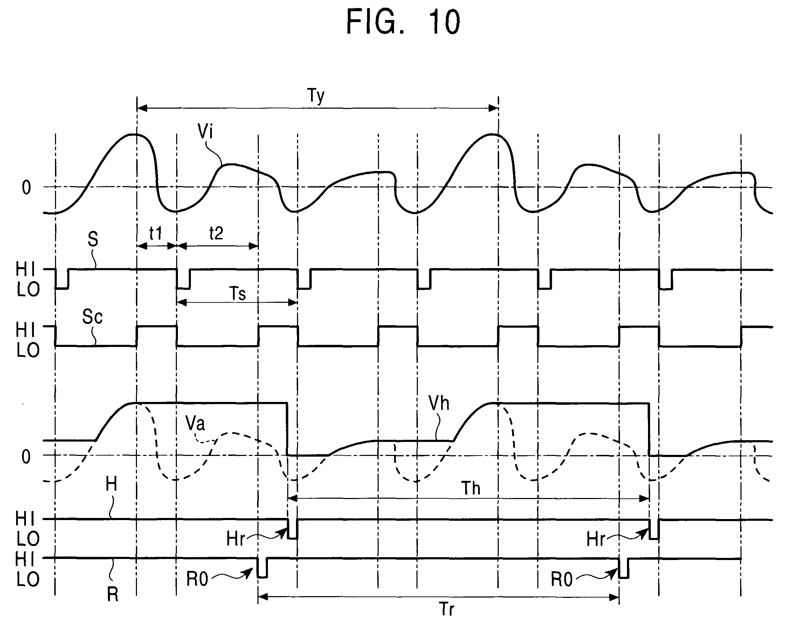

A shown in Figure 10, for the detected voltage Vi, the axis of abscissa shows the time and the axis of ordinate shows the magnitude of the voltage. Figure 10 also shows temporal changes in shutter open or closed state Sc indicating whether the shutter 124 is open or closed; the open state corresponding to a very short time t1 and the closed state corresponding to a very short time t2 are periodically repeated. The axis of abscissa shows the time and the axis of ordinate shows the open or closed state of the shutter 124.

That is, L0 positions on the axis of ordinate correspond to the open state of the shutter 124, and HI positions on the axis of abscissa correspond to the closed state of the shutter 124.

As shown in Figure 9, the control device 128 transmits a shutter opening and closing signal S to the shutter 124 and this signal controls the opening and closing of the shutter 124. As shown in Figure 10, for the shutter opening and closing signal S, the axis of abscissa shows the time and the axis of ordinate shows the output state of the opening and closing signal. L0 positions on the axis of ordinate correspond to a state in which the control device 128 transmits a signal for opening the shutter for the very short time t2, and HI positions correspond to a state in which the control device 128 does not transmit this signal.

A cycle in which the shutter 124 open state is transmitted on the shutter opening and closing signal S, that is, a shutter opening and closing cycle Ts corresponds to the sum of the very short time t1 as the shutter closed state and the very short time t2 as the shutter open state.

The shutter opening and closing cycle Ts must equal at least the amount of time required for the detected voltage Vi to start with a minimum voltage value, then reach a peak voltage value dependent on the amount of incident infrared rays, and finally decrease down to the minimum voltage value again. This is the minimum required amount of time. The minimum voltage value is obtained when the shutter 124 totally prevents the infrared rays from the yarn Y from reaching the infrared sensor 125.

That is, the very short time t2 when the shutter 124 is open must equal the amount of time required for the detected voltage Vi to start with the minimum voltage value and reach the peak voltage value dependent on the amount of incident infrared rays. The very short time t2 must equal the amount of time required for the detected voltage Vi to decrease down to the minimum voltage value again.

Further, the cycle in which the infrared rays are blocked is desirably as short as possible in order to accurately measure the temperature using the infrared sensor 125.

The detection signal peak hold circuit of the infrared sensor will be explained.

The peak hold circuit fixes and holds the peak value of the continuously varying detected voltage Vi (analog voltage).

As shown in Figure 9, the detected voltage Vi from the infrared sensor 125 is input to an amplifier 126. The detected voltage Vi is amplified by the amplifier Vi and input to the peak hold circuit 127 as a detected voltage Va. As shown in Figure 10, for the detected voltage Va, the axis of abscissa shows the time and the axis of ordinate shows the magnitude of the voltage; the waveform of the voltage is obtained by amplifying the detected voltage Vi in the direction of the axis of ordinate. In Figure 10, the detected voltages Vi and Va have the same shape for convenience.

The control device 128 outputs a peak hold signal H to the peak hold circuit 127, and this signal H fixes, holds, and clears the peak value of the detected voltage Va. As shown in Figure 10, for the peak hold signal H, the axis of abscissa shows the time and the axis of ordinate shows the output state of the peak hold signal H. L0 positions on the axis of ordinate correspond to timing (Hr) with which the fixation of the peak is cleared, and HI positions correspond to a state where the peak value is held.

A peak value detecting circuit for detecting the peak value of the input voltage is well known and comprises two voltage follower circuits for converting input and output impedance and a capacitor provided between the two voltage follower circuit, for holding the peak value of an input signal.

An input signal to the peak value detecting circuit charges the capacitor through the input-side voltage follower circuit. Further, a diode is connected between the input-side voltage follower circuit and the capacitor to prevent charges stored in the capacitor from flowing in the opposite direction. In this manner, the capacitor of the peak value detecting circuit holds the peak value of the input voltage and the output-side voltage follower circuit outputs the peak value.

In the peak hold circuit 127, the peak value detecting circuit comprises a switch circuit for releasing charges from the capacitor depending on the input of the peak hold signal H so as to fix, hold, and clear the peak value output from the peak value detecting circuit.

Accordingly, as shown in Figure 10, the peak hold circuit 127 outputs a hold voltage Vh corresponding to the fixed and held peak value of the detected voltage Va. Then, when the L0 position state (Hr) of the peak hold signal H is output, the hold voltage Vh is reset to the value 0.

This peak hold cycle Th is longer than a swing cycle Ty corresponding to the cycle of the detected voltage Vi. The swing cycle Ty corresponds to the swing of the yarn Y, that is, the variation of its position near the focal position F, and the yarn Y is ensured to pass through the focal position F at least once during the swing cycle Ty. Thus, if the peak hold cycle Th is longer than the swing cycle Ty, the peak value obtained when the yarn Y is at the focal position F is ensured to be obtainable from the detected voltage Va at least once during the peak hold cycle Th.

That is, Th ≧ Ty.

In the example in Figure 10, Th = Ty.

The shutter opening and closing cycle Ts is preferably shorter as described previously.

Then, the following conclusion can be drawn: the shutter 124 must be closed and opened a number of times (preferably, as frequently as possible) during each swing cycle Ty in order to accurately obtain the peak value of the detected value Va, which appears during each swing cycle Ty.

That is, Ts < Ty.

As shown in Figure 10, for a loading signal R, the axis of abscissa shows the time and the axis of ordinate shows the output state of the loading signal R. For the loading signal generated by the control device 128, L0 positions (RO) on the axis of ordinate correspond to timing with which the constantly output hold voltage Vh is loaded in the control device 128.

For the loading signal R, a cycle for switching to the L0 position, that is, a loading cycle Tr of the hold voltage Vh is as long as the peak hold cycle Th in Figure 10.

The hold voltage Vh is desirably loaded immediately before the L0 position state (Hr) of the peak hold signal H for clearing the hold voltage Vh (discharge) is output.

The peak hold cycle Th must equal the loading cycle Tr, or the loading cycle Tr must be an integral multiple of the peak hold cycle Th.

Tha is, Tr = kTh (k is a natural number).

Next, the control device 128 comprising a microcomputer including a central processor unit (CPU), a memory and I/0.

As described previously, the control device 128 transmits the shutter opening and closing signal to the shutter 124 to control the opening and closing of the shutter 124. The control device 128 also outputs the peak hold signal H to the peak hold circuit 127 to fix and hold the peak value of the detected voltage Va.

The control device 128 measures the temperature of the yarn Y as the measured object based on the loaded hold voltage Vh, for example, the average value of plural continuous hold voltages Vh. Since the peak value of the detected voltage Va has been determined, the temperature of the measured object can be measured using the above described correlationship. Although the correlationship with the detected voltage Vi has been used, the temperature can be derived with the detected voltage Va, taking the effects of the amplifier 126 into consideration.

Further, only the data loaded in the control device 128 is the hold voltage Vh loaded during each loading cycle Tr. Moreover, these data are based on the peak value required to derive the temperature and which has been determined from the above described correlationship.

That is, since the hold voltage Vh is loaded in the control device 128 after the peak value during the corresponding swing cycle Ty has been determined, the amount of information processing to be executed by the control device 128 and the amount of information transmitted between the non-contact thermometer 121 and the control device 128 are significantly reduced.

Next, a third embodiment of the present invention will be described.

The rough configuration of a false twisting unit 201, 201 ··· is as shown in Figure 7, so its detailed description is omitted.

The false twisting processing machine comprises a plurality of false twisting processing units 201, temperature measuring devices 202 connected to the corresponding false twisting processing units, and a central control device 230. The temperature measuring devices 202 and the central control device 230 each comprise a microcomputer including central processing unit (CPU), a memory, I/0, and other components.

Then, the temperature measuring device 202 and the central control device 230 according to the third embodiment will be described.

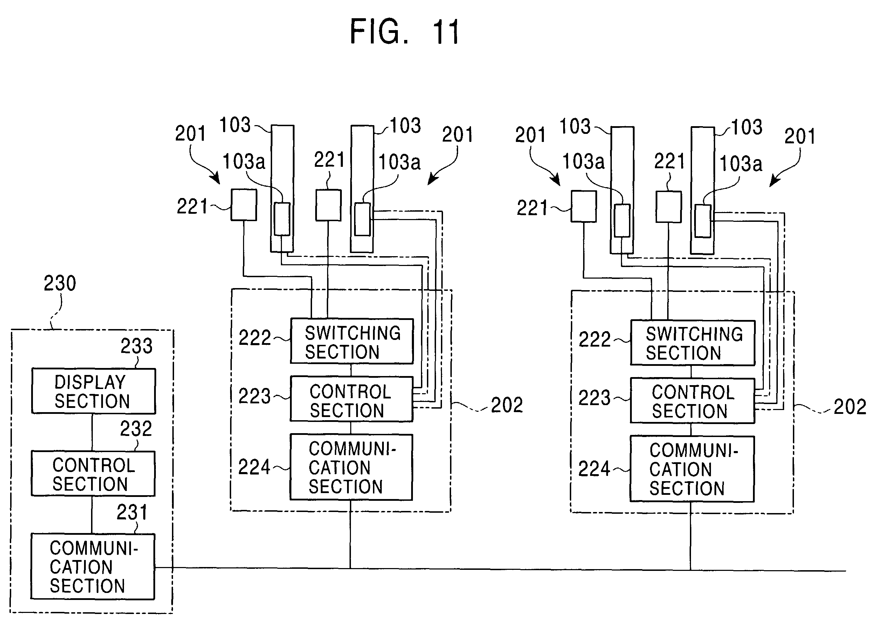

One temperature measuring device 202 is disposed for a specified number of false twisting processing units 201, 201 ···, and the temperature measuring device 202 comprises a switching section 222, a control section 223, and a communication section 224 as shown in Figure 11.

A yarn thermometer 221 is configured to be connectable to the switching section 222, and if the yarn thermometer 221 is connected to the switching section 222, the temperature measured by the yarn temperature 221 is input to the temperature measuring device 202.

The specified number of false twisting processing units 201 can all be connected to the switching section 222. Accordingly, the switching section 222 is configured to periodically switch the connection between the yarn thermometers 221, 221 ··· of the false twisting processing units 201 in a manner such that once the yarn thermometer 221 of one of the false twisting processing units 201 has completed the temperature measurement, the yarn thermometer 221 of the next false twisting processing unit 1 can start the temperature measurement.

The control section 223 is connected to the switching section 222 and the communication section 224. The control section 223 accepts the inputs of measurement data from the yarn thermometers via the switching section 222 and transmits the data to the central control device via the communication section 224 if the data meets the conditions described later. That is, the control section 223 has a function as means for determining a temperature error based on the yarn temperature data.

Further, the communication section 224 is configured so as to transmit, when a temperature error occurs, an alarm signal indicative of this temperature and the spindle number of a spindle with this temperature as described later in detail.

The heater 103 internally has a heater thermometer 103a and is connected to the control section 223 together with the heater thermometer 103a so that the temperature measured by the heater thermometer 103a is constantly input to the control section 223, which controls the heating by the heater 103.

The central control device 230 provided at the end of the false twisting processing machine comprises a communication section 231, a control section 232, and a display section 233 and is connected to the temperature measuring devices 202, 202 ··· via a shared communication line. The control section 232 is configured so as to set target temperature values for the temperature measuring devices 202, 202 ··· via the communication section 231 and the communication sections 224 of the temperature measuring devices 202, 202 ···.

Next, the temperature abnormality monitoring procedure according to the first example which is executed in the false twisting processing machine of the third embodiment will be explained.

As described previously, the false twisting processing machine includes the one central control device 230 having the plurality of temperature measuring devices 202 connected thereto. That is, the plurality of temperature measuring devices 202 share the central control device 230. The temperature measuring devices 202 each have the specified number of false twisting units 201, 201 ·· • , the yarn thermometer 221, and the heater 203.

The temperature abnormality monitoring procedure is similarly executed in the respective temperature measuring devices 202. Here, the control operation on the false twisting unit 201 connected to one of the temperature measuring devices 202 will be representatively described.

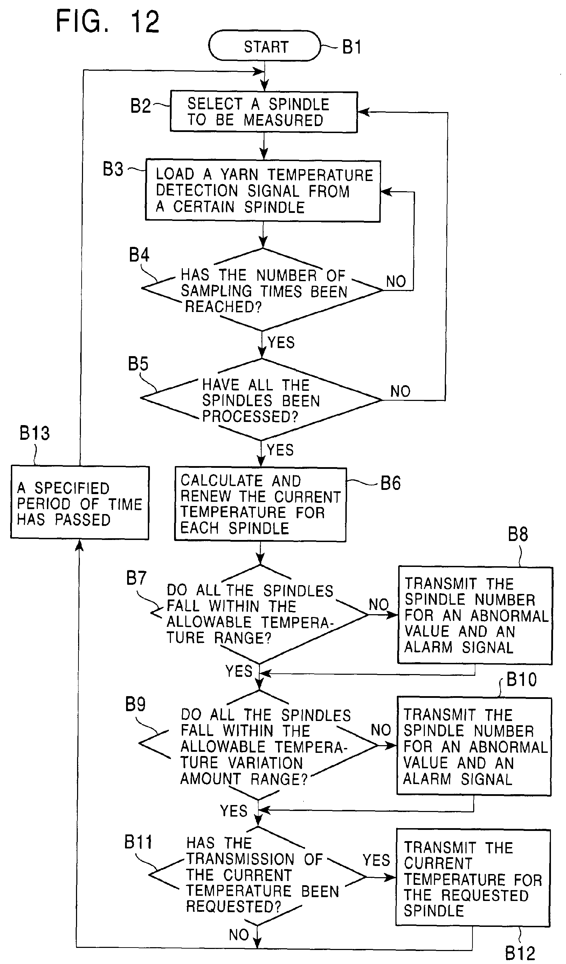

As shown in Figure 12, when the temperature abnormality monitoring procedure is started (B1), one of the plural yarn thermometers 221, 221 ··· connected to the temperature measuring device 202 is first selected (B2).

Accordingly, the switching section 222 of the temperature measuring device 202 switches the connection as described previously. Then, the yarn thermometer 221 measures the temperature of the spindle being processed upon the selection and transmits the yarn temperature data obtained by means of the measurement, to the control section 223 (B3). The control section 223 associates the transmitted yarn temperature data with the spindle number and stores these data in a storage medium provided in the control section 223.

The yarn temperature data is measured a number of times to minimize the effects of errors. That is, it is determined whether the data have been sampled for the selected spindle a predetermined number of times (B4). If the data have not been sampled for the selected spindle a specified number of times, the procedure returns to the processing in B3. The measurement is carried out several tens of times per second, and the predetermined number of samplings are executed instantaneously.

If the measurements have been completed for the selected spindle, it is determined whether all the yarn thermometers 221 connected to the temperature measuring device 202 have completed the measurements (B5). If any spindle has not been measured, the procedure returns to the processing in B2.

Once all the spindles have been measured, the current temperature for each spindle is calculated and renewed (B6). The average value of the yarn temperature data sampled for each spindle the predetermined number of times and stored in the storage medium is provided as the current temperature at the time of the measurement. The current temperature obtained during the preceding measurement is changed to the preceding temperature, and the current temperature newly obtained is stored in the storage medium as the current temperature at that moment.

The temperature measuring device 202 is already provided with a temperature range including normal values of the yarn temperature during processing, as an allowable temperature range, and the control section 223 determines whether the current temperature for each spindle falls within the allowable temperature range (B7). If the current temperature deviates from the allowable temperature range, the spindle number of the spindle for which this abnormal value has been measured and the current temperature data for the spindle as well as the alarm signal indicating that the temperature error is occurring are transmitted from the control section 223 to the central control device 230 (B8).

As described previously, the central control device 230 has the display section 233 that can display the signal transmitted from the temperature measuring device 202. When a temperature error occurs, the spindle number of the spindle for which the abnormal value has been measured and the current temperature data are transmitted from the temperature measuring device 202 and displayed on the display section 233 so as to be viewed by the operator. The simultaneously transmitted alarm signal causes a blinking display on the display section 233 comprising a lighting display or the like or causes a voice alarm to be issued in order to draw the operator's attention.

Then, the amount of variations in current yarn temperature is calculated regardless of the determination in B7. The amount of variations in current temperature is given as the deviation value between the current temperature and preceding temperature for each spindle. The amount of variations in current temperature is used to predict the amount of variations in temperature per unit time. The temperature measuring device 202 is already provided with a temperature variation amount range including normal values of the amount of variations in yarn temperature during processing, as an allowable temperature variation amount range, and the control section 223 determines whether the current temperature variation amount in each spindle falls within the allowable temperature variation amount range (B9). If the current temperature variation amount deviates from the allowable temperature variation amount range, the spindle number of the spindle for which this abnormal value has been measured and the current temperature variation amount data for the spindle as well as the alarm signal indicating that the temperature error is occurring are transmitted from the control section 223 to the central control device 230 (B10)

Moreover, a temperature variation amount error can be determined based on a plurality of sampling data for calculating the current temperature. This determination can also be made depending on whether the amount of variations in the sampling data falls within the allowable temperature variation amount range. This makes it possible to detect even instantaneous variations in temperature which occur in a shorter time.

In this case, the central control device 230 also executes a process similar to that executed when a temperature error occurs as described above. That is, the spindle number of the spindle for which the abnormal value has been measured and the current temperature variation amount data are and displayed on the display section 233, and a blinking display on the display section 233 or a voice alarm indicating that a temperature variation amount error is occurring is provided to draw the operator's attention.

It is determined whether the transmission of the current temperature has been requested, irrespective of the determination in B9 (B11). That is, it is determined whether the operator used the central control device 230 to request the temperature measuring device 202 to transmit the current temperature for the spindle being measured, after the end of the processing in the last B11 and before the end of the processing in the current B9 and B10. If the transmission of the current temperature has been requested, the current temperature for the requested spindle is transmitted from the temperature measuring device 202 to the central control device 230 (B12).

Then, the temperature error monitoring operation is stopped for a specified period of time regardless of the determination in B11 (B13), and the series of processes are repeated starting with B2.

The processes in B7 and B9 may be replaced with each other, and it is important to determine both the current temperature error and the current temperature variation amount error.

Then, a second example in the false twisting processing machine of the third embodiment will be explained.

In the second example, the temperature is not measured for all the spindles in operation but for a representative one of plural spindles.

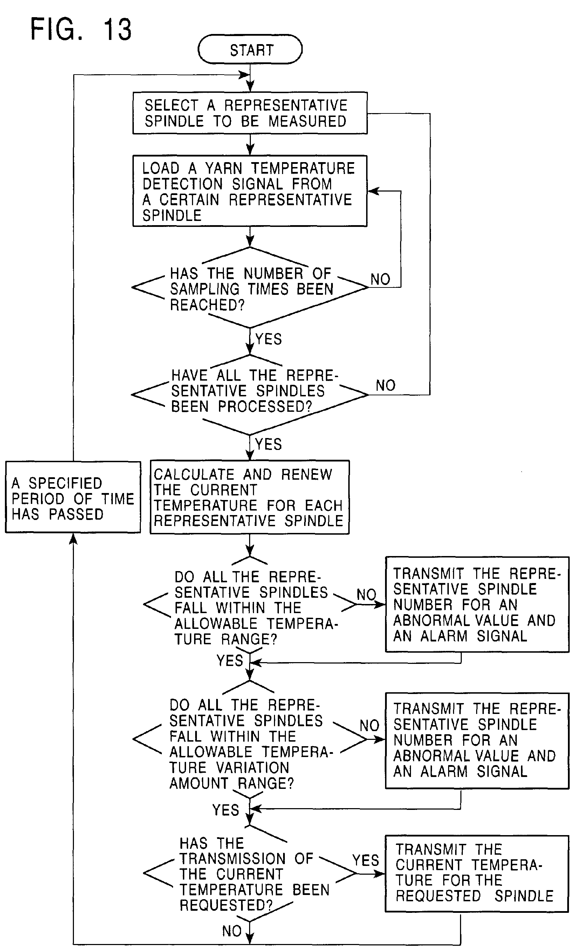

The temperature error monitoring means in the second example is carried out as shown in Figure 13. The representative spindle in Figure 13 refers to one of plural spindles which is used as a representative for measurements. All the spindles are measured in the first example, whereas the representative spindle is measured in the second example. The other points of this procedure are substantially the same as those of the first example (Figure 12), so the description of Figure 13 is omitted.

Next, a non-contact temperature measuring device provided in the false twisting processing machine will be explained.

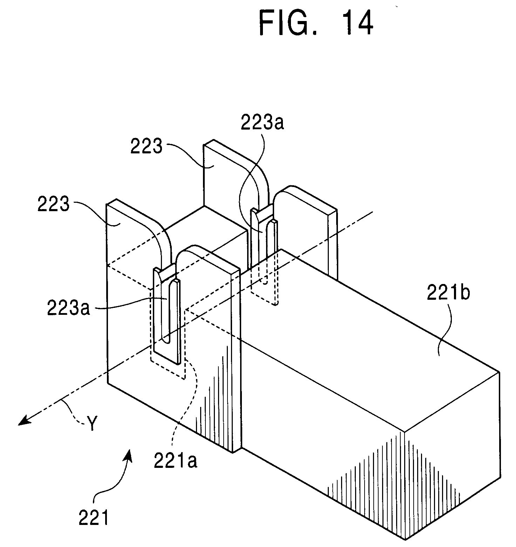

The non-contact temperature measuring device has an infrared emission thermometer 221 as a non-contact thermometer arranged downstream of the heater 103 corresponding to the location where the temperature of the yarn Y is measured; the infrared emission thermometer 221 measures the temperature by detecting infrared rays emitted from the measured object such as the yarn Y. As shown in Figure 14, the yarn Y is passed through a measuring section 221a of the infrared emission thermometer 221 to have its temperature measured.

The infrared emission thermometer 221 is fixedly provided downstream of the heater 103 (between the heater 103 and the cooling plate 104) for each spindle, but may be provided downstream of the cooling plate 104 or the heater 108 (near the outlet), where the non-contact temperature measuring device may be constructed.

Further, the yarn Y comprises thermoplastic synthetic fibers such as polyester or polyamide, for example.

The infrared emission thermometer 221 measures the temperature of the yarn Y passing therethrough, so that the yarn Y runs through the infrared emission thermometer 221 in a substantial non-contact manner so as to avoid hindering the transmission to the yarn Y of twisting effected by the false twisting device 105. That is, the yarn Y has its temperature measured by the infrared emission thermometer without being nipped or bent.

A main body 221b of the infrared emission thermometer 221 has the measuring section 221a formed therein and through which the yarn Y passes for a temperature measurement, and yarn guides 223 and 223 installed in the measuring section 221a on both sides of the running direction of the yarn Y.

The yarn guides 223 and 223 each have a slit-shaped guide section 223a formed therein and with which the yarn Y contacts intermittently and thus has its swing regulated.

The yarn Y runs while being guided by the guide sections 223a and 223a, to pass through the measuring section 221a constructed in the main body 221b of the infrared emission temperature 221. Upon passing through the measuring section 221a, the yarn Y has its temperature detected.

The temperature detecting device and method for a running yarn uses the reflector and the converging means to allow the infrared sensor to obtain a sufficient amount of infrared rays for detection, the infrared rays being emitted from the running yarn. Accordingly, the temperature of the thin yarn running while vibrating can be directly and accurately detected in a non-contact manner. Thus, when the running yarn is heated and processed, the heating temperature of the heating means can be controlled based on the detected temperature of the running yarn, thus providing processed yarns of uniform quality.

Further, the present invention provides a temperature measuring device for allowing an infrared sensor to obtain infrared rays emitted from a measured object while switching the transmission during predetermined cycles by means of a shutter, the temperature measuring device comprising a peak hold circuit for executing a peak hold process on a detection signal output from the infrared sensor, during a cycle longer than the switching cycle of the shutter, and a control device for obtaining peak values held by the peak hold circuit, during predetermined cycles. Consequently, the detection signal obtained when the measured object is located at the focal position can be held as the peak value, thus enabling the temperature to be accurately measured even if the measured object is swung. Further, the detection signals are continuously input to the peak hold circuit, and the peak values are held in real time. Consequently, the control device is not required to calculate the peak value using software, and the temperature can be measured by loading the held peak values during predetermined cycles.

The control device obtains the peak value held by the peak hold circuit, during a cycle interval longer than the switching cycle of the shutter. This reduces the amount of processing to be executed by the control device to obtain the peak values, thus enabling accurate and efficient temperature measurements.

The cycle during which the control device obtains the peak value from the peak hold circuit is longer than a swing cycle of the measured object. Consequently, it is unnecessary to load the peak value a number of times during one swing cycle, thus enabling the temperature to be accurately measured even if the measured object is swung.

The present invention provides a false twisting processing machine comprising a false twisting device, a yarn heating device located upstream of the false twisting device, thermometers each provided for a corresponding spindle or a corresponding group of predetermined spindles, for measuring temperature of a heated yarn, a temperature measuring device for obtaining detection signals from the thermometers, and a control device including a display section and shared by a plurality of the temperature measuring devices, the temperature measuring device transmitting temperature data determined based on the detection signals from the thermometers to the control device together with spindle number data so that the display section of the control device can display spindle numbers and yarn temperature.

Further, the control device has the common display section to allow the yarn temperature in any spindle to be easily checked in connection with the spindle number.

Moreover, since the data on the results of measurements by the yarn thermometers can be transmitted to the control device, the operator can determine a defective spindle earlier.

The temperature measuring device comprises means for determining a temperature error based on the detection signals from the thermometers and means for transmitting an alarm signal indicative of the temperature error to the control device together with a spindle number. The temperature measuring device determines a temperature error to reduce the amount of processing to be executed by the control device and the amount of communication required between the temperature measuring device and the control device. The temperature data particularly concerning defective spindles are transmitted to eliminate the needs for temperature data for a predetermined number of cycles for each spindle, thus substantially reducing the amount of communication.

The means for determining a temperature error determines a temperature error based on the current temperature and a predetermined allowable temperature range and also determines a temperature variation amount error based on the amount of variations within a predetermined period of time and a preset allowable temperature variation range. Consequently, even if the absolute yarn temperature falls within the allowable range, it can be checked whether the yarn temperature varies significantly, thereby providing more accurate temperature error monitoring means. Additionally, when such an error occurs, the alarm signal is transmitted to the central control device, thus allowing the operator to recognize the abnormal condition earlier.

The thermometers are non-contact thermometers that measure the yarn temperature in a non-contact manner, and the non-contact thermometers are arranged near an outlet of the yarn heating device. Consequently, the yarn thermometers are prevented from hindering the propagation of twisting, thus enabling a normal false twisting process while measuring the yarn temperature. Further, the yarn is prevented from contacting with the yarn thermometers, thereby precluding heat from escaping to the yarn temperature measuring device. Thus, the temperature can be measured more accurately than with non-contact temperature measuring devices, thus making it possible to determine temperature errors more accurately.

## Claims

1. A temperature detecting device for a running yarn including an infrared sensor that obtains infrared rays emitted from the running yarn, via an incidence section, the temperature detecting device being **characterized by** comprising converging means located between said incidence section and said infrared sensor, for converging the infrared rays obtained through said incidence section, to said infrared sensor, a reflector spaced from said incidence section and having a reflecting surface directed toward said incidence section, and a running yarn passing space located between said incidence section and said reflector.

2. A temperature detecting device according to Claim 1, **characterized by** comprising means for regulating said running yarn passing space between a focus of said converging means and said reflector.

3. A temperature detecting device according to Claim 1 or Claim 2, **characterized in that** said reflector is planar.

4. A temperature detecting device according to any one of Claims 1 to 3, **characterized by** comprising guide means provided at least either before or after a space sandwiched between said incidence section and said reflector, for restraining deflection of the running yarn.

5. A temperature detecting method for a running yarn including an infrared sensor that obtains infrared rays emitted from the running yarn, via an incidence section, the temperature detecting method being **characterized in that** the infrared rays emitted from the running yarn are directly guided to the infrared sensor via converging means and are also indirectly guided to the infrared sensor via a reflector and the converging means.

6. A temperature detecting method according to Claim 5, **characterized in that** the running yarn is passed between a focus of said converging means and said reflector.

7. A temperature detecting method according to Claim 5 or Claim 6, **characterized in that** said reflector is planar.

8. A temperature detecting method according to any one of Claims 5 to 7, **characterized by** comprising detecting temperature while using guide means to restrain deflection of the running yarn at least either before or after a space sandwiched between said incidence section and said reflector.

9. A temperature measuring device that allows an infrared sensor to obtain infrared rays emitted from a measured object while switching the transmission during predetermined cycles by means of a shutter, the temperature measuring device being **characterized by** comprising a peak hold circuit for executing a peak hold process on a detection signal output from the infrared sensor, during a cycle longer than the switching cycle of the shutter, and a control device for obtaining peak values held by the peak hold circuit, during predetermined cycles.

10. A temperature measuring device according to Claim 9, **characterized in that** the control device obtains the peak value held by the peak hold circuit, during a cycle interval longer than the switching cycle of the shutter.

11. A temperature measuring device according to Claim 9 or Claim 10, **characterized in that** the cycle during which the control device obtains the peak value from the peak hold circuit is longer than a swing cycle of the measured object.

12. A false twisting processing machine **characterized by** comprising a false twisting device, a yarn heating device located upstream of the false twisting device, thermometers each provided for a corresponding spindle or a corresponding group of predetermined spindles, for measuring temperature of a heated yarn, a temperature measuring device for obtaining detection signals from the thermometers, and a control device including a display section and shared by a plurality of the temperature measuring devices, the temperature measuring device transmitting temperature data determined based on the detection signals from the thermometers to the control device together with a spindle number data so that the display section of the control device can display the spindle number and yarn temperature.

13. A false twisting processing machine according to Claim 12, **characterized in that** said temperature measuring device comprises means for determining a temperature error based on the detection signals from the thermometers and means for transmitting an alarm signal indicative of the temperature error to the control device together with a spindle number.

14. A false twisting processing machine according to Claim 12 or Claim 13, **characterized in that** said means for determining a temperature error determines a temperature error based on the current temperature and a predetermined allowable temperature range and also determines a temperature variation amount error based on the amount of variations within a predetermined period of time and a preset allowable temperature variation range.

15. A false twisting processing machine according to any one of Claims 12 to 14, **characterized in that** said thermometers are non-contact thermometers that measure the yarn temperature in a non-contact manner, and the non-contact thermometers are arranged near an outlet of the yarn heating device.
